# EUROPÄISCHE PATENTSCHRIFT

(11) **EP 1 992 481 B1**
(45) Veröffentlichungstag und Bekanntmachung des Hinweises auf die Patenterteilung: **03.06.2015**
(21) Anmeldenummer: 07009793.6
(22) Anmeldetag: 16.05.2007
(51) Int. Cl.: B32B 27/32, B65D 65/40

(54) **Verpackungsfolienverbund für Folienverpackungen**
Packing film composite for film packaging
Composé de feuilles d'emballage pour emballages en film

(43) Veröffentlichungstag der Anmeldung: 19.11.2008
(73) Patentinhaber: Mondi Halle GmbH, 33790 Halle (DE)
(72) Erfinder: Neumann, Andreas, 33790 Halle (DE); Block, Joachim, 33790 Halle (DE); Niepelt, Ralf, 48599 Gronau (DE)
(74) Vertreter: Albrecht, Rainer Harald

(56) Entgegenhaltungen:
- EP-A1- 0 620 111

## Beschreibung

Die Erfindung betrifft eine Verbundfolie, im Folgenden auch Verpackungsfolienverbund genannt, für Folienverpackungen mit einer Außenfolie, einer Kernfolie und einer heißsiegelbaren Innenfolie. Dabei weist die von der Außenfolie gebildete Oberfläche bei einem Messwinkel von 60° einen Glanz von weniger als 40 auf. Aus dem Verpackungsfolienverbund können durch Falten und Siegeln Folienverpackungsbeutel gebildet werden, wobei die weitere Ausgestaltung der Verpackungsbeutel nicht eingeschränkt ist. Es können beispielsweise Seitenfaltenbeutel gebildet werden, die zunächst an einer Seite unverschlossen und unbefüllt gefertigt und nachfolgend einer Befüllvorrichtung zugeführt werden, wobei die Verpackungsbeutel dann nach der Befüllung, vorzugsweise durch Heißsiegeln, verschlossen werden. Im Rahmen der Erfindung kann der Verpackungsfolienverbund auch in einem so genannten "Form, Fill and Seal"-Prozess (FFS) eingesetzt werden, wobei in unmittelbarer Folge der Verpackungsbeutel geformt, befüllt und verschlossen wird. Typische Verpackungsgüter sind ohne Einschränkung Tiernahrung, Lebensmittel, Hygieneartikel, Gartenprodukte wie Erde und Torf, Waschmittel und Kosmetikartikel.

In der Praxis werden bei hochwertigen Verpackungen in der Regel Verpackungsfolienverbunde mit den eingangs beschriebenen Merkmalen eingesetzt, wobei typischerweise die innerhalb des Verbundes liegende Seite der Außenfolie einen durch das Material der Außenfolie vor Abrieb geschützten Konteraufdruck aufweist. Als bedruckbare Außenfolien werden häufig Folien aus biaxial orientiertem Polyethylenterephthalat (PET) oder biaxial orientiertem Polypropylen (BOPP) eingesetzt, die kostengünstig und gut bedruckbar sind.

Um bei der subjektiven Wahrnehmung einer Folienverpackung bei einem potentiellen Käufer positive Assoziationen zu den Produkteigenschaften des Verpackungsgutes zu erzeugen und der Verpackung ein hochwertiges Aussehen zu verleihen, wird häufig eine matte Erscheinung und ein Softtouch-Charakter gewünscht. Wenn eine Folie sowohl matt als auch vergleichsweise steif ist, spricht man auch von einem Papertouch-Charakter, Der Softtouch-Charakter wird durch die Oberflächenstruktur der Außenschicht bestimmt. Des Weiteren kann durch eine solche Ausgestaltung eine Abgrenzung gegenüber Wettbewerbsprodukten erfolgen. Um ein mattes Aussehen zu erreichen sind matte PET- und BOPP-Typen bekannt, die jedoch eine sehr glatte Oberfläche aufweisen.

Aus der Druckschrift US 2006/0093800 A1 ist eine Folienverpackung bekannt, die eine matte Oberfläche und bei der Benutzung eine geringe Geräuschentwicklung aufweist. Die Folienverpackung ist aus einem Verpackungsfolienverbund mit einer mehrlagig coextrudierten Barrierefolie aus Polypropylen und einer heißsiegelbaren Folie, die vorzugsweise aus Polyethylen besteht, gebildet. Zur Verbesserung der matten Eigenschaften können anorganische Füll- oder Farbstoffe vorgesehen sein, die jedoch die Transparenz der Barrierefolie verringern.

Eine opake, matte Polypropylen-Mehrschichtfolie mit einer Basisschicht, einer Deckschicht und einer Zwischenschicht ist aus der Druckschrift EP 0 620 111 A1 bekannt. Die Deckschicht kann aus einem Polypropylen-Copolymer auf der Basis von Polypropylen und Polyethylen gebildet sein. Dort ist beschrieben, dass der Glanz weniger als 80, vorzugsweise 25 bis 65 betragen kann. Aus der Folie können beispielsweise Kunststoffetiketten gefertigt werden. Als Außenschicht eines Verpackungsfolienverbundes mit einer innen liegenden Bedruckung ist die Folie aufgrund ihrer Opazität nicht geeignet.

Der Erfindung liegt die Aufgabe zugrunde einen Verpackungsfolienverbund für Folienverpackungsbeutel anzugeben, der ein hochwertiges Aussehen und eine weiche Haptik aufweist, gut zu verarbeiten ist und einen innen liegenden Aufdruck aufweist, der durch die Außenfolie sichtbar ist.

Ausgehend von einem Verpackungsfolienverbund mit den eingangs beschriebenen Merkmalen wird die Aufgabe erfindungsgemäß dadurch gelöst, dass die Außenfolie an einer Oberfläche des Verpackungsfolienverbundes eine Schicht aufweist, die zu 50 Gew.-% bis 100 Gew.-% aus einem Polypropylen-Copolymer, Rest Polyolefin besteht, dass die von der Außenfolie gebildete Oberfläche bei einem Messwinkel von 60° einen Glanz von weniger als 40, vorzugsweise weniger als 20, besonders bevorzugt weniger als 10 aufweist und dass die Außenfolie ungereckt ist. Um eine weiche und matte Oberfläche zu erreichen, ist vorzugsweise ein weiches, mehrphasiges Polypropylen-Copolymer vorgesehen, welches aus Propylen, Ethylen und/oder Ethylen-α-Olefinen gebildet sein kann. Ein aufgrund seiner Eigenschaften geeignetes Polypropylen-Copolymer kann durch eine Nachpolymerisation von Polypropylen mit einem Propylen-Ethylen-Gemisch hergestellt werden. Der geringe Glanz verleiht dem Verpackungsfolienverbund ein samtartiges, hochwertiges Aussehen, wobei durch die Transparenz der Außenschicht ein innerhalb des Verpackungsfolienverbundes angeordneter Aufdruck deutlich und klar sichtbar ist. Erfindungsgemäß weist die Schicht an der Oberfläche des Verpackungsfolienverbundes als Hauptbestandteil Polypropylen-Copolymer und als Rest Polyolefin auf, wobei nicht ausgeschlossen sein soll, dass diese Schicht und die weiteren Schichten des Verpackungsfolienverbundes auch in einem geringen Anteil von maximal 5 % und typischerweise weniger als 2 % Beimischungen, wie beispielsweise Verarbeitungshilfsmittel, aufweisen können. Füllstoffe wie Kreide oder Talkum zur Erzeugung eines matten Aussehens der Außenfolie können die Transparenz verringern und sind im Rahmen der Erfindung üblicherweise nicht vorgesehen.

Im Rahmen einer bevorzugten Ausgestaltung der Erfindung liegt das zuvor beschriebene Polypropylen-Copolymer, welches vorzugsweise mehrphasig und vergleichsweise weich ist, in der die Oberfläche des Verpackungsfolienverbundes bildenden Schicht der Außenfolie zu 50 Gew.-% bis 90 Gew.-% vor. Durch die Abmischung mit zumindest einer weiteren Polymerkomponente kann aufgrund der unterschiedlichen Materialien eine ungleichmäßigere, deutlich rauere Oberfläche erzeugt werden. In Bezug auf eine Ausgestaltung, bei der die beschriebene Schicht der Außenfolie vollständig aus weichem, mehrphasigen Polypropylen-Copolymer besteht oder nur Beimischungen von weniger als 10 Gew.-% enthält, kann eine bei einer Berührung der Oberfläche deutlich wahrnehmbare Verbesserung eines im Rahmen der Erfindung gewünschten Softtouch-Charakters erreicht werden.

Erfindungsgemäß ist die Außenfolie ungereckt. Nach der Bildung der Außenfolie ist also kein separates Orientieren durch einen Reckprozess vorgesehen. Im Rahmen der Erfindung kann die Außenfolie durch Extrusion, vorzugsweise Blasfolienextrusion ein- oder mehrschichtig gebildet werden. Abgesehen von einer gewissen Orientierung der Polymerketten bei dem Extrusionsprozess erfolgt erfindungsgemäß keine weitere Orientierung. Gereckte und ungereckte Folien können sich in ihren Eigenschaften grundlegend unterscheiden, wobei eine Verreckung der Folie sich insbesondere in der Ausrichtung der Polymerketten äußert. Bei den aus der Praxis bekannten Verpackungsfolienverbunden, die eine glatte Außenfolie aus Polypropylen aufweisen, können die gewünschten Eigenschaften erst durch ein Verrecken und eine biaxiale Orientierung erreicht werden. Ein derartiger, zusätzlicher Verfahrensschritt bei der Fertigung der Außenfolie ist erfindungsgemäß nicht vorgesehen.

Die Bestimmung des Glanzes erfolgt mit einem Reflektometer, wobei sich die im Rahmen der Erfindung angegebenen Werte für den Glanz auf die DIN 67 530:1982-01, ("Reflektometer als Hilfsmittel zur Glanzbeurteilung an ebenen Anstrich- und Kunststoff-Oberflächen") beziehen. Bei der Messung werden eine Lichtquelle und ein Empfänger in einer Beobachtungsebene senkrecht zu der Oberfläche derart angeordnet, dass der Einfallswinkel gleich dem Ausfallswinkel ist. Der gemessene Lichtstrom wird dann bei einer linearen Skalierung auf den Referenzwert 100 bezogen, der dem Glanz einer planen, polierten schwarzen Glasplatte entspricht.

Erfindungsgemäß weist das Polypropylen-Copolymer bei Raumtemperatur eine Härte von weniger als 40 Shore D auf. Die Bestimmung der Härte erfolgt im Rahmen der Erfindung gemäß der EN ISO 868:2003-10. Ein weiteres Maß für die mechanischen Eigenschaften des Polypropylen-Copolymers ist das Biegemodul nach DIN EN ISO 178:2006-04. Gemäß der vorliegenden Erfindung liegt das Biegemodul des Polypropylen-Copolymers vorzugsweise zwischen 290 MPa und 370 MPa. Bei den angegebenen Eigenschaften ist die Schicht an der Oberfläche, die das Polypropylen-Copolymer als wesentlichen Bestandteil aufweist, vergleichsweise weich und kann so zu einer angenehmen papier- oder stoffartigen Haptik beitragen.

Vorzugsweise ist vorgesehen, dass die von der Außenfolie gebildete Oberfläche auch einen großen Reibungskoeffizienten aufweist, um die Verarbeitung des Verpackungsfolienverbundes bzw. der daraus gefertigten Folienverpackungsbeutel zu verbessern. Bei den gemäß dem Stand der Technik eingesetzten matten PET- und BOPP-Typen besteht das Problem, dass diese eine glatte Oberfläche aufweisen, so dass es bei einem Stapeln von befüllten Beuteln oder von vorkonfektionierten Beuteln, die für eine nachfolgende Befüllung bereitgehalten werden, zu einem unerwünschten Abrutschen der Beutel voneinander kommen kann. Durch die erfindungsgemäße Ausgestaltung der Außenfolie können diese Nachteile überwunden werden, wobei der dynamische Reibungskoeffizient bei einem Aufliegen der von der Außenfolie des Verpackungsfolienverbundes gebildeten Oberfläche auf sich selbst vorzugsweise größer als 0,35, besonders bevorzugt größer als 0,45 ist. Die im Rahmen der Erfindung angegebenen Werte des dynamischen Reibungskoeffizienten beziehen sich auf die DIN EN ISO 8295:2004-10, wobei die Bestimmung bei den in der Norm festgeschriebenen Bedingungen mit einem entsprechenden Prüfgerät durchzuführen ist. Bei der Bestimmung des dynamischen Reibungskoeffizienten erfolgt eine Messung von Folie gegen Folie, wobei die jeweils von der Außenfolie gebildeten Oberflächen zweier Folienmuster aufeinander aufliegen. Grundsätzlich ist bekannt, dass bei Kunststofffolien der statische und der dynamische Reibkoeffizient von der Orientierung der Muster relativ zueinander und in Bezug auf die Bewegungsrichtung abhängig sein kann. Die angegebenen Mindestwerte sollen dabei im Rahmen der Erfindung unabhängig von der Ausrichtung der zu prüfenden Folien erreicht werden. Des Weiteren sind die Messungen ohne eine längere Zwischenlagerung an Folienabschnitten durchzuführen, die frei von Verunreinigungen sein müssen.

Die Dicke der Außenfolie liegt typischerweise zwischen 10 µm und 50 µm, vorzugsweise zwischen 20 µm und 40 µm. Die Außenfolie kann im Rahmen der Erfindung ohne Einschränkung als Monofolie oder als mehrlagig coextrudierte Folie ausgebildet sein, wobei die Außenfolie bevorzugt durch Blasfolienextrusion bzw. Blasfoliencoextrusion gebildet ist und wobei nach der Extrusion ein Recken der Folie nicht vorgesehen ist.

Bei einer Ausgestaltung der Außenfolie als Monofolie besteht diese vorzugsweise zu 50 Gew.-% bis 100 Gew.-% aus mehrphasigem Polypropylen-Copolymer, Rest Polypropylen aus der Gruppe der orientierten Polypropylen-Homopolymere, Polypropylen-Block-Copolymere, Polypropylen-Random-Copolymere oder Mischungen dieser Polypropylentypen.

Bei einer Ausgestaltung der Außenfolie als Coextrusionsfolie ist diese dreilagig mit einer Außenschicht, einer Kernschicht und einer Kaschierschicht ausgebildet. Gemäß einer bevorzugten weiteren Ausgestaltung ist dabei vorgesehen, dass die Außenfolie symmetrisch aufgebaut ist, wobei die Kaschierschicht und die Außenschicht zu 50 Gew.-% bis 100 Gew.-% aus mehrphasigem Polypropylen-Copolymer, Rest Polypropylen aus der Gruppe der orientierten Polypropylen-Homopolymere, Polypropylen-Block-Copolymere, Polypropylen-Random-Copolymere oder Mischungen dieser Polypropylentypen bestehen. Die Kernschicht, deren Dicke üblicherweise größer als 1/3 der Gesamtdicke der symmetrisch aufgebauten Außenfolie ist, weist vorzugsweise zwischen 50 Gew.-% bis 100 Gew.-% des Polypropylen-Copolymers auf, welches auch den wesentlichen Bestandteil der Außenschicht und der Kaschierschicht bildet. Als weiterer Bestandteil kann ein Polyolefin, beispielsweise metallocenkatalysiertes, lineares Polyethylen niedriger Dichte (mLLDPE) vorgesehen sein, welches eine gute Kompatibilität zu den restlichen Polymeren gewährleistet.

Im Rahmen der erfindungsgemäßen Ausgestaltung ist vorgesehen, dass der Verpackungsfolienverbund aus insgesamt drei Folien gebildet ist, wobei zwischen der Außenfolie und der Innenfolie eine Kernfolie vorgesehen ist. Die Folien können bei der Bildung des Verpackungsfolienverbundes vorzugsweise mit Klebstoff kaschiert werden. Die Gesamtdicke des Verpackungsfolienverbundes liegt typischerweise zwischen 70 µm und 200 µm, vorzugsweise zwischen 100 µm und 180 µm.

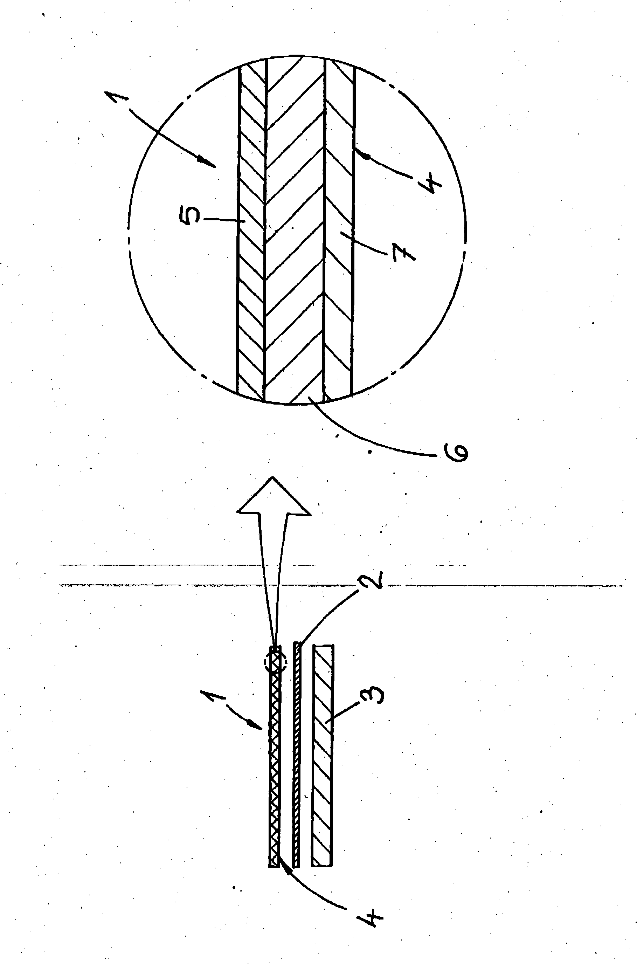

Die Erfindung wird im Folgenden anhand eines Ausführungsbeispiels unter Bezugnahme auf die einzige Figur erläutert. Die einzige Figur zeigt den Aufbau des Verpackungsfolienverbundes.

Der in der einzigen Figur dargestellte Verpackungsfolienverbund, ist aus einer Außenfolie 1, einer Kernfolie 2 und einer heißsiegelbaren Innenfolie 3 gebildet, die miteinander durch ein 2-Komponenten-PUR-Klebersystem lösemittelfrei verklebt sind. Aus Gründen der Übersichtlichkeit sind die Außenfolie 1, die Kernfolie 2 und die Innenfolie 3 in der einzigen Figur in einem Abstand zueinander dargestellt, wobei auch der Klebstoff nicht dargesteht ist. Die Außenfolie 1 ist auf ihrer in dem Verpackungsfolienverbund innen liegenden Seite mit einem Aufdruck 4 versehen, der aufgrund der Transparenz der Außenfolie 1, die frei von Füllstoffen wie Kreide oder Talkum ist, gut sichtbar ist und der vor der Lamination der Folien mit Klebstoff im Konterdruck auf die Außenfolie 1 aufgebracht wurde.

Die ungereckte Außenfolie 1 ist durch Blasfoliencoextrusion gebildet und weist einen symmetrischen, dreischichtigen Aufbau mit einer Außenschicht 5, einer Kernschicht 6 und einer Kaschierschicht 7 auf, wobei die Außenschicht 5 die Oberfläche des Verpackungsfolienverbundes bildet. Die Außenschicht 5 und die Kaschierschicht 7 weisen eine Dicke von 8 µm auf und bestehen zu 70 Gew.-% aus mehrphasigem, weichen Polypropylen-Copolymer (PP-CO), Rest Polypropylen-Block-Copolymere (PP-BC). Durch die Abmischung des mehrphasigen, weichen Polypropylen-Copolymer mit einer weiteren Polymerkomponente wird eine besonders ungleichmäßige, weniger glatte Oberfläche erreicht. Durch die erhöhte Rauhigkeit wird der gewünschte Softtouch-Charakter verbessert. Die Kernschicht 6 mit einer Dicke von 14 µm besteht zu 50 Gew.-% aus dem mehrphasigem Polypropylen-Copolymer, welches den Hauptbestandteil der Außenschicht 5 und der Kaschierschicht 7 bildet. Als weitere Polymerkomponenten enthält die Kernschicht 6 mLLDPE und LDPE. Diese Rohstoffe sind kostengünstig, verbessern die Verarbeitbarkeit und besitzen eine gute Kompatibilität zu Polypropylen-Copolymeren.

Das mehrphasige Polypropylen-Copolymer ist durch eine Nachpolymerisation von Polypropylen mit einem Ethylen-Propylen-Gemisch hergestellt und zeichnet sich durch seine Weichheit und optischen Eigenschaften aus, die der Oberfläche des Verpackungsfolienverbundes ein mattes Aussehen und ein Soft-Touch-Effekt verleihen. Das Polypropylen-Copolymer kann beispielsweise bei Raumtemperatur eine Härte von 36 Shore D und ein Biegemodul von 330 MPa (Megapascal) aufweisen. Zu einer angenehmen, zu dem matten Aussehen der Oberfläche passenden Haptik trägt auch ein hoher Reibungskoeffizient bei.

Die Kernfolie 2 ist eine Monofolie aus PET und weist eine Dicke von 12 µm auf. Die 100 µm dicke Innenfolie 3 besteht aus Polyethylen und weist eine gute Siegelbarkeit auf. Die Gesamtdicke des Verpackungsfolienverbundes beträgt einschließlich des Klebstoffes etwa 146 µm. Die gut siegelbare Innenfolie 3 kann vorzugsweise Polyethylen hoher Dichte (HDPE) enthalten oder aus HDPE gebildet sein. HDPE kann auch in einer Schicht der Außenfolie 1 und/oder in der Kernfolie 2 als Beimischung vorgesehen sein. Durch HDPE kann die Steifigkeit des Verpackungsfolienverbundes erhöht bzw. eingestellt werden, so dass neben dem Softtouch-Effekt auch ein Papertouch-Charakter erzielt werden kann. Von einem Papertouch-Charakter spricht man, wenn eine Folie trotz einer geringen Dicke eine vergleichsweise hohe Steifigkeit aufweist und matt ist.

Ein Muster des zuvor beschriebenen Verpackungsfolienverbundes (Beispiel 1) wurde zur Bestimmung des dynamischen Reibungskoeffizienten µ_{D} einer Prüfung gemäß DIN EN ISO 8295 und zur Bestimmung des Glanzes bei 60° einer Prüfung gemäß DIN 67530 unterzogen. Die Ergebnisse der Messungen sind in Tabelle 1 dargestellt. Für das Vergleichsbeispiel 1 wurde ein Verpackungsfolienverbund mit einer Innenfolie aus Polyethylen und einer Außenfolie aus mattem, trübem Polyethylenterephthalat gebildet. Vergleichsbeispiel 2 betrifft einen Verpackungsfolienverbund mit einer Innenfolie aus Polyethylen und einer mehrschichtigen Außenfolie, bei der die Folienschicht an der Oberfläche des Verpackungsfolienverbundes aus einem matten Polyethylenterephthalat gebildet ist. Der Verpackungsfolienverbund des Vergleichsbeispiels 3 entspricht im Wesentlichen dem Vergleichsbeispiel 2, wobei die beiden außenliegenden Schichten der Außenfolie aus einem matten Polyethylenterephthalat gebildet sind. Ein Verpackungsfolienverbund mit einer Innenfolie aus Polyethylen und einer Außenfolie aus biaxial orientierten Polypropylen wurde im Rahmen des Vergleichsbeispiels 4 untersucht. Vergleichsbeispiel 5 betrifft schließlich einen Verpackungsfolienverbund mit einer Innenfolie aus Polyethylen und einer Außenfolie, die ein glänzendes Polyethylenterephthalat mit Antislipeigenschaften aufweist.

| | **µ_{D} (EN ISO 8295)** | **Glanz 60° (DIN 67 530)** |
|---|---|---|
| **Beispiel 1** | 0,57 | 6 |
| Vergleichsbeispiel 1 | 0,26 | 19 |
| Vergleichsbeispiel 2 | 0,32 | 46 |
| Vergleichsbeispiel 3 | 0,25 | 33 |
| Vergleichsbeispiel 4 | 0,18 | 9 |
| Vergleichsbeispiel 5 | 0,75 | 117 |

Die Vergleichsbeispiele 1 bis 4 weisen einen vergleichsweise geringen dynamischen Reibungskoeffizienten µ_{D} auf. Bei einem Stapeln von aus diesen Verpackungsfolienverbunden gefertigten Folienbeuteln besteht bei der Verarbeitung und Lagerung die erhöhte Gefahr eines Abrutschens. Des Weiteren ist der Glanz insbesondere bei dem Vergleichsbeispiel 2 unerwünscht hoch.

Neben der beschriebenen dreischichtigen Ausgestaltung der Außenfolie 1 kann auch eine Ausbildung der Außenfolie 1 als Monofolie vorgesehen sein, wobei diese dann zu zumindest 50 Gew.-% aus dem Polypropylen-Copolymer besteht.

## Patentansprüche

1. Verbundfolie für Folienverpackungen mit einer Außenfolie (1), einer Kernfolie (2) und einer heißsiegelbaren Innenfolie (3), wobei die von der Außenfolie (1) gebildete Oberfläche bei einem Messwinkel von 60° einen Glanz von weniger als 40 aufweist, **dadurch gekennzeichnet, dass** die Außenfolie (1) aus einer ein- oder mehrschichtigen, füllstofffreien, transparenten, ungereckten Blasfolie besteht, die an ihrer der Kernfolie (2) zugewandten Innenseite im Konterdruck bedruckt ist und zumindest in einer die Oberfläche bildenden außenseitigen Schicht (5) eine Polymerzusammensetzung aus einem Polyolefin und aus mindestens 50 Gew.-% eines weichen, mehrphasigen Polypropylen-Copolymers, das bei Raumtemperatur eine Härte von weniger als 40 Shore-D hat, aufweist.

2. Verbundfolie nach Anspruch 1, **dadurch gekennzeichnet, dass** die Polymerzusammensetzung der außenseitigen Schicht (5) 50 Gew.-% bis 90 Gew.-% des weichen, mehrphasigen Polypropylen-Copolymers enthält.

3. Verbundfolie nach Anspruch 1 oder 2, **dadurch gekennzeichnet, dass** das Polypropylen-Copolymer bei Raumtemperatur einen Biegemodul zwischen 290 MPa und 370 MPa aufweist.

4. Verbundfolie nach einem der Ansprüche 1 bis 3, **dadurch gekennzeichnet, dass** die Außenfolie (1) als Monofolie ausgebildet ist, welche zu 50 Gew.-% bis 90 Gew-% aus einem weichen, mehrphasigen Polypropylen-Copolymer, das bei Raumtemperatur eine Härte von weniger als 40 Shore-D aufweist, Rest Polypropylen aus der Gruppe der orientierten Polypropylen-Homopolymere, Polypropylen-Block-Copolymere, Polypropylen-Random-Copolymere oder Mischungen dieser Polypropylentypen besteht.

5. Verbundfolie nach einem der Ansprüche 1 bis 3, **dadurch gekennzeichnet, dass** die Außenfolie (1) dreilagig mit einem symmetrischen Schichtenaufbau coextrudiert ist und eine Außenschicht (5), eine Zwischenschicht (6) und eine der Kemfolie zugewandte Kaschierschicht (7) aufweist, wobei die Kaschierschicht (7) und die Außenschicht (5) zu 50 Gew.-% bis 90 Gew.-% aus einem weichen, mehrphasigen Polypropylen-Copolymer, das bei Raumtemperatur eine Härte von weniger als 40 Shore-D aufweist, Rest Polypropylen aus der Gruppe der orientierten Polypropylen-Homopolymere, Polypropylen-Block-Copolymere, Polypropylen-Random-Copolymere oder Mischungen dieser Polypropylentypen bestehen.

6. Verbundfolie nach einem der Ansprüche 1 bis 5, **dadurch gekennzeichnet, dass** die Kernfolie aus einem Polyethylenterephthalat (PET) besteht.

7. Verbundfolie nach einem der Ansprüche 1 bis 6, **dadurch gekennzeichnet, dass** die Gesamtdicke der Verbundfolie zwischen 70 µm und 200 µm, vorzugsweise zwischen 100 µm und 180 µm beträgt.

8. Verbundfolie nach einem der Ansprüche 1 bis 7, **dadurch gekennzeichnet, dass** die Dicke der Außenfolie (1) zwischen 10 µm und 50 µm, vorzugsweise zwischen 20 µm und 40 µm liegt.

9. Verbundfolie nach einem der Ansprüche 1 bis 8, **dadurch gekennzeichnet, dass** der nach DIN EN ISO 8295:2004-10 bestimmte dynamische Reibungskoeffizient bei einem Aufliegen der von der Außenfolie (1) der Verbundfolie gebildeten Oberfläche auf sich selbst größer als 0,35, vorzugsweise größer als 0.45, ist.

## Claims

1. A composite film for film packagings with an outer film (1), a core film (2) and a heat-sealable inner film (3), wherein the top surface formed by the outer film (1), at an angle of measurement of 60°, exhibits a gloss level of less than 40, **characterised in that** the outer film (1) is comprised of a single or multi-layered, filler-free, transparent, unstretched, blown film which is printed by reverse printing on its inner surface facing the core film (2), and which at least in an outside layer (5) forming the top surface comprises a polymer compound made up of polyolefin and at least 50% by weight of a soft, multi-phase polypropylene copolymer which at room temperature has a hardness of less than 40 Shore-D.

2. The composite film according to claim 1, **characterised in that** the polymer compound making up the outside layer (5) contains 50% to 90% by weight of the soft multi-phase polypropylene copolymer.

3. The composite film according to claim 1 or 2, **characterised in that**, at room temperature, the polypropylene copolymer has a flexural modulus of between 290 MPa and 370 MPa.

4. The composite film according to one of claims 1 to 3, **characterised in that** the outer film (1) is designed as a mono film, 50% to 90% by weight of which is made up of a soft multi-phase polypropylene copolymer which at room temperature has a hardness of less than 40 Shore-D, the rest consisting of polypropylene belonging to the group of oriented polypropylene homopolymers, polypropylene block copolymers, polypropylene random copolymers, or a mixture of these polypropylene types.

5. The composite film according to one of claims 1 to 3, **characterised in that** the outer film (1) is coextruded in three layers with a symmetrical build-up of layers and comprises an outside layer (5), an intermediate layer (6) and a cladding layer (7) facing the core film, wherein the cladding layer (7) and the outside layer (5) consist of 50% to 90% by weight of a soft multi-phase polypropylene copolymer which at room temperature has a hardness of less than 40 Shore-D, the rest consisting of polypropylene belonging to the group of oriented polypropylene homopolymers, polypropylene block copolymers, polypropylene random copolymers, or a mixture of these polypropylene types.

6. The composite film according to one of claims 1 to 5, **characterised in that** the core film is made from a polyethylene terephthalate (PET).

7. The composite film according to one of claims 1 to 6, **characterised in that** the total thickness of the composite film is between 70 µm and 200 µm, preferably between 100 µm and 180 µm.

8. The composite film according to one of claims 1 to 7, **characterised in that** the thickness of the outer film (1) is between 10 µm and 50 µm, preferably between 20 µm and 40 µm.

9. The composite film according to one of claims 1 to 8, **characterised in that** when the top surface of the composite film which is formed by the outer film (1) is laid on top of itself, the dynamic friction co-efficient determined according to DIN EN ISO 8295:2004-10 is greater than 0.35, preferably greater than 0.45.

## Revendications

1. Film composite pour des emballages par film, avec un film extérieur (1), un film central (2) et un film intérieur (3) thermoscellable, la surface formée par le film extérieur (1) présentant sous un angle de mesure de 60°C une brillance inférieure à 40, **caractérisé en ce que** le film extérieur (1) est constitué d'un film soufflé monocouche ou multicouches, exempt d'agent de charge, transparent, non étiré, qui sur sa face interne dirigée vers le film central (2) est imprimé en impression inverse et qui comporte au moins sur une couche externe (5) formant la surface une composition polymère en un polyoléfine et en au moins 50 % en poids d'un copolymère de polypropylène souple, multiphases, qui à température ambiante a une dureté inférieure à 40 D-Shore.

2. Film composite selon la revendication 1, **caractérisé en ce que** la composition polymère de la couche externe (5) contient de 50 % en poids à 90 % en poids du copolymère de propylène souple, multiphases.

3. Film composite selon la revendication 1 ou la revendication 2, **caractérisé en ce que** le copolymère de propylène présente à température ambiante un module de flexion compris entre 290 MPa et 370 MPa.

4. Film composite selon l'une quelconque des revendications 1 à 3, **caractérisé en ce que** le film extérieur (1) est réalisé sous forme de monofilm qui est constitué à de 50 % en poids à 90 % en poids en un copolymère de propylène multiphases, qui à température ambiante présente une dureté inférieure à 40 D-Shore, d'un reste de polypropylène du groupe des homopolymères de polypropylène, des copolymères blocs de polypropylène, des copolymères aléatoires de polypropylène orientés ou de mélanges desdits types de propylènes.

5. Film composite selon l'une quelconque des revendications 1 à 3, **caractérisé en ce que** le film extérieur (1) est coextrudé en trois couches avec une structure de couches symétrique et comporte une couche extérieure (5), une couche intermédiaire (6) et une couche de masquage (7) dirigée vers le film central, la couche de masquage (7) et la couche extérieure (5) étant constituées à de 50 % en poids à 90 % en poids d'un copolymère de propylène souple, multiphases, qui à température ambiante présente une dureté inférieure à 40 D-Shore, d'un reste de polypropylène du groupe des homopolymères de polypropylène, des copolymères blocs de polypropylène, des copolymères aléatoires de polypropylène orientés ou de mélanges desdits types de propylènes.

6. Film composite selon l'une quelconque des revendications 1 à 5, **caractérisé en ce que** le film central est constitué d'un polyéthylène téréphtalate (PET).

7. Film composite selon l'une quelconque des revendications 1 à 6, **caractérisé en ce que** l'épaisseur totale du film composite se situe entre 70 µm et 200 µm, de préférence entre 100 µm et 180 µm.

8. Film composite selon l'une quelconque des revendications 1 à 7, **caractérisé en ce que** l'épaisseur du film extérieur (1) se situe entre 10 µm et 50 µm, de préférence entre 20 µm et 40 µm.

9. Film composite selon l'une quelconque des revendications 1 à 8, **caractérisé en ce que** lors d'un appui de la surface formée par le film extérieur (1) du film composite sur elle-même, le coefficient de frottement dynamique déterminé selon DIN EN ISO 8295 : 2004-10 est supérieur à 0,35, de préférence supérieur à 0,45.
